# DEMANDE DE BREVET EUROPEEN

(11) **EP 0 882 684 A1**
(43) Date de publication de la demande: **09.12.1998**
(21) Numéro de dépôt: 98420079.0
(22) Date de dépôt: 11.05.1998
(51) Int. Cl.: C03B 40/02

(54) **Procédé de lubrification des moules de verrerie par combustion directe dans ceux-ci de solution de type amine ou amino-alcool**

(30) Priorité: 04.06.1997 FR 9706850; 24.03.1998 FR 9803862
(71) Demandeur: Promatech, 69740 Genas (FR); Tribo Industrie, 94500 Champigny (FR)
(72) Inventeur: Mathey, Jacques, 69100 Villeurbannes (FR); Boucher, Francois, 94500 Champigny sur Marne (FR)

(57) **Abrégé**

L'invention consiste en un procédé original destiné à lubrifier les moules de verrerie dans les procédés pressé, pressé soufflé ou soufflé soufflé. Le principe consiste à déposer sur les parois internes des moules une fine pellicule de carbone grâce à la combustion incomplète d'un composé liquide aqueux de type amine ou amino-alcool.

## Description

•La présente invention concerne un procédé original de production de carbone pulvérulent appelé encore graphite pulvérulent ou noir de suie ou "carbon black" sur les parois internes des moules de fabrication de récipients en verre par combustion incompléte d'un composé aminé ou d'un amino-alcool.

•Trois procédés sont employés pour produire les récipients en verre sur machines automatiques de moulage:

•Le procédé dit "soufflé - soufflé" dans lequel la goutte de verre dite paraison tombe dans un premier moule qui forme une ébauche grâce à l'injection d'air sous pression. Après transfert de l'ébauche dans un deuxième moule ce dernier assure la finition dans les mêmes conditions par introduction d'air sous pression.

•Le procédé dit "pressé - soufflé" dans lequel l'ébauche est produite par pressage de la paraison. Et le procédé "pressé" simple

•Dans tous les cas il faut assurer une lubrification correcte des surfaces métalliques des moules afin de permettre au verre de ne pas adhérer au métal et ainsi obtenir un état de surface parfait ainsi qu'une bonne régularité et homogénéité du verre.

•La lubrification de moules dont la surface interne est portée à la température de 400 à 500 degrés centigrades est délicate d'autant plus qu'au moment du moulage la température du métal est voisine de celle de la goutte de verre, appelée paraison, c'est à dire dans tous les cas supérieure à 1000 degrés centigrades.

•L'emploi de lubrifiant solide est la seule solution possible dans de telles conditions de température.

•Seul le carbone sous forme cristalline appelé encore graphite colloïdal ou "carbon black" permet d'assurer une lubrification correcte.

• Les procédés universellement utilisés consistent en :

•Traitement de surface préalable des moules au moyen de laques contenant du graphite colloïdal ou du fluorure de carbone. Brevet US 4,165,974.

•Lubrification des moules pendant la production au moyen de mélanges de savons métalliques et d'hydrocarbures chargés de graphite colloïdal encore appelés "graisses graphitées"

L'introduction dans les moules avant la chute de la paraison dans les moules d'hydrocarbures contenant ou non du graphite: brevet US 4,409,010 Graphoidal Development Limited (England) 26 juin 1981 Ce procédé a pour inconvénient de générer dans les moules des dépôts d'hydrocarbures néfastes à une production correcte des récipients en verre.

•L'introduction dans les moules grâce à une pulvérisation sur la paraison avant son introduction dans les moules d'une émulsion dans l'eau d'un hydrocarbure brevet FR 94/04199 déposé le 08/04/1994 par DEVECO S.A. (Confédération Helvétique) Ce procédé possède les mêmes inconvénients que le brevet US 4,409,010

•L'injection directe dans le moule grâce à des canalisation d'un hydrocarbure brevet FR 1,285,586 La présence d'hydrocarbures dans le moule à une température supérieure à 400 degrés centigrades est néfaste à la production des récipients en verre et provoque un encrassement des moules nécessitant de fréquents démontages de ces derniers..

•La production directe de carbone pulvérulent dans le moule par craquage d'un jet d'acétylène dans une flamme aéro ou oxy-combustible ; Brevets Air liquide US 4,412,974 du 1/11/1983 et FR 86,03733 du 17/03/1986 Ces brevets ont pour inconvénients de nécessiter l'emploi de gaz dangereux (acétylène) et la mise en place d'installations délicates et coûteuses.

•Dans tous les cas les procédés visent à déposer sur les parois internes des moules avant introduction du verre en fusion d'une couche uniforme et inférieure à un micron d'épaisseur de carbone cristallisé. Tous mis à part les brevets décrits ci dessus sous la référence AIR LIQUIDE ont pour inconvénients une mise en oeuvre délicate ,une médiocre régularité dans les résultats, une pollution importante des lieux de production, un encrassement très rapide des moules ce qui nécessite de fréquents démontages.

•On a constaté que la production in-situ d'un dépôt de carbone cristallisé grâce à la combustion de matières organiques constituait la solution idéale. En effet ce type de procédé est le seul à permettre d'obtenir une couche de carbone cristallisé uniforme permettant d'obtenir une meilleure qualité du verre produit.

•L'invention consiste à introduire dans le moule au moyen d'un système de pulvérisation une substance liquide qui au contact de la goutte de verre va spontanément s'enflammer et générer du carbone cristallisé à l'exception d'autres composés chimiques. Le procédé contrairement aux brevets dits précédemment AIR LIQUIDE ne nécessite pas la mise en place d'une installation de production d'une flamme aéro ou oxy-combustible.

•L'invention porte également sur la définition de la dite substance liquide.

•L'avantage de l'invention est donc de ne nécessiter qu'une installation peut coûteuse pour pulvériser le liquide générateur de carbone cristallisé, de ne générer aucune pollution , de permettre d'obtenir un très bon état de surface des récipients en verre moulés , d'éviter tout encrassement des moules et de prolonger la durée de vie des moules.

•Le produit faisant l'objet de l'application dans le présent brevet est une solution dans l'eau d'un composé organique dérivant de l'ammoniaque par substitution à l'hydrogène d'un ou de plusieurs radicaux alcoyles dénommés encore alkyles. Ces composés portent en chimie organique le nom générique d'amines et amino alcools..

•Les amines sont des composés stables plus ou moins complexes contenant exclusivement du carbone de l'hydrogène et de l'azote. Vu leur richesse en hydrogène et en carbone les vapeurs d'amines sont combustibles. Leur combustion dans les conditions particulières des moules à verre, c'est à dire en l'absence d'excès d'oxygène génère de l'azote gaz inerte et volatile, de l'hydrogène qui facilite la combustion et du carbone cristallisé sous forme de noir de carbone appelé encore "carbone black". C'est la présence de ce carbone qui facilite le démoulage du verre et améliore l'état de surface.

•L'invention portera également sur l'emploi des amino-alcools. Ces derniers seront employés de préférence aux amines primaires secondaires ou tertiaires car elles sont généralement plus compatibles avec les règles d'hygiène communément admises.

•L'eau présente dans la formule permet une meilleure application au moyen de pulvérisateurs, son passage à l'état de vapeur au moment de la combustion ne joue aucun rôle dans le processus de moulage du verre.

•La pulvérisation devra être faite dans le moule immédiatement avant l'introduction de la paraison. L'élévation de température dans le moule par la présence du verre en fusion sera suffisante pour déclencher la combustion du mélange aminé.

•Les amines ou amino-alcools employés seront mélangé à l'eau dans des proportions comprises entre 10% et 90%. Par exemple la TRIETHYLAMINE, amine tertiaire , sera mélangée à l'eau dans une fourchette comprise entre 40 et 60%.

•L'avantage du procédé est de supprimer l'application de graisse graphitée dans les moules et ainsi de réduire la pollution tout en améliorant les conditions de travail.

•L'invention sera décrite concrètement de la façon suivante: EXEMPLE: Le produit à pulvériser sera constitué par une solution contenant 50% d'eau et 50% de 2,2',2" - Nitrolotriéthanol . Les pulvérisateurs seront fixés de façon verticale c'est à dire parallèlement à la trajectoire de la paraison. La pulvérisation sera faite après l'opération dite de "soufflage" c'est à dire ventilation fermée, soit avant la mise en place de l'entonnoir soit après sa mise en place. Suivant la nature du travail la pulvérisation se fera toutes les chutes de paraison ou suivant un cycle préétabli. La quantité de mélange injectée dans le moule à chaque pulvérisation sera de l'ordre de 0.1 millilitre. Néanmoins suivant la surface interne du moule à traiter cette proportion pourra varier dans des proportions de -50% à + 100%.

•On a constaté que l'emploi du procédé permet d'obtenir un bien meilleur aspect extérieur du flaconnage et ainsi de réduire dans des proportions importantes les mises au rebut. On considère que l'amélioration du rendement du à la diminution des rebuts et aux arrêts machine pour lubrification des moules serait de 3% environ.

•L'absence totale d'encrassement des moules du au fait que le système ne dépose aucun dépôt charbonneux sur le métal permet de réduire dans des proportions importantes la résistance thermique entre le verre et le métal du moule. Le dépôt de graphite pulvérulent exempt de résidus de combustion d'hydrocarbures permet de limiter le gradient de température dans le verre et ainsi de faire disparaître les défauts d'état de surface tels que peaux d'orange glaçures ou plis .La qualité de l'état de surface des récipients influant directement sur la résistance mécanique du verre, le procédé sera très intéressant pour la fabrication des récipients dits en verre "allégés" c'est à dire ayant une épaisseur de parois réduite par rapport à la normale.

•Un autre avantage du procédé est d'éliminer totalement les opérations manuelles de lubrification des moules car le procédé est entièrement automatique. En conséquence les risques d'accidents corporels et les pollutions dues à la combustion des hydrocarbures contenus dans les lubrifiants sont totalement éliminés.

## Revendications

1. Procédé de lubrification des moules de verreries en procèdes "soufflé soufflé" ou "pressé soufflé" dans lequel on dépose grâce à la combustion d'un liquide sur les parois internes des moules une couche de lubrifiant capable de permettre le démoulage et d'améliorer l'état de surface.

2. Procédé de lubrification des moules de verrerie suivant la revendication numéro 1 caractérisé par le fait que la couche de lubrifiant est un lubrifiant solide.

3. Procédé de lubrification des moules de verrerie suivant la revendication numéro 2 caractérisé par le fait que le lubrifiant solide est du carbone sous forme cristalline appelé encore graphite, noir de carbone, noir de suie ou "carbon black"

4. Procédé de lubrification des moules de verrerie suivant la revendication numéro 3 caractérisé par le fait que le carbone est produit par la combustion incomplète d'un liquide en phase aqueuse.

5. Procédé de lubrification des moules de verrerie suivant la revendication numéro 4 caractérisé par le fait que le liquide employé en phase aqueuse est de type amine ou amino alcool.

6. Procédé de lubrification des moules de verrerie suivant la revendication numéro 5 caractérisé par le fait que les amines peuvent être de type primaires secondaires ou tertiaires

7. Procédé de lubrification des moules de verrerie suivant la revendication numéro 5 caractérisé par le fait que les amino-alcools peuvent être de type primaires secondaires ou tertiaires

8. Procédé de lubrification des moules de verrerie suivant les revendications 6 et 7 caractérisé par le fait que le mélange dans l'eau des amines ou des amino-alcools peut se faire à des concentrations comprises entre 1 et 99 %

9. Procédé de lubrification des moules de verrerie suivant les revendications 6 et 7 caractérisé par le fait que le mélange en phase aqueuse peut être constitué par un mélange en toutes proportions d'amines ou d'amino-alcools.
